# NEW EUROPEAN PATENT SPECIFICATION

(11) **EP 1 137 672 B2**
(45) Date of publication and mention of the opposition decision: **20.12.2006**
(45) Mention of the grant of the patent: 07.01.2004
(21) Application number: 99971429.8
(22) Date of filing: 02.11.1999
(51) Int. Cl.: C08B 37/00, C08B 31/18, C08B 15/02, C08B 15/06, C08B 37/18

(54) **CARBOHYDRATE OXIDATION PRODUCTS AND DERIVATIVES**
OXIDATIONSPRODUKTE VON KOHLENHYDRATEN UND DERIVATEN
PRODUITS ET DERIVES D'OXYDATION GLUCIDIQUE

(30) Priority: 02.11.1998 EP 98203706
(43) Date of publication of application: 04.10.2001
(73) Proprietor: NEDERLANDSE ORGANISATIE VOOR TOEGEPAST-NATUURWETENSCHAPPELIJK ONDERZOEK TNO, 2628 VK Delft (NL)
(72) Inventor: BESEMER, Arie, Cornelis, NL-3958 CC Amerongen (NL); JETTEN, Jan, Matthijs, NL-3701 JL Zeist (NL); VAN DOREN, Hendrik, Arend, NL-3818 ZE Amersfoort (NL); VAN DER LUGT, Jan, Pieter, NL-3824 AA Amersfoort (NL)
(74) Representative: van Westenbrugge, Andries
(86) International application number: PCT/NL1999/000673
(87) International publication number: WO 2000/026257

(56) References cited:
- WO-A-95/12619
- BE-A- 757 272
- US-A- 2 894 945
- US-A- 3 553 193
- US-A- 3 634 395
- US-A- 3 947 352
- US-A- 4 683 298
- B ANN-CHRISTINE SALOMONSSON ET AL: "Coupling of 1-aminododecan to starch by bromine oxidation and reductive amination" STARCH STARKE, vol. 44, no. 7, 1992, pages 260-263, XP002081699
- Al. Jeanes et al: The Journal of Org. Chemistry (1955), Vol. 20, Nr.11, p.1565-1568
- Jayme G.; Maris S.: Über die Oxydation der Cellulose mit gepufferter perjodsäure und die Gewinnung von Abbauprodukten der Oxydierten cellulose. Vol.77, Nr.6/7 1944
- Carbohydrate Polymers 33 (1997) p.153-162, S.Veelaert, "Chemical and Physical transitions of periodate oxidised potato starch in water based on "Physico-chemical transitions of dialdehyde starch in water", S.Veelaert, Thesis, Universiteit Gent, 1995-1996, Chapter 7

## Description

The present invention relates to novel oxidation products of carbohydrates and derivatives thereof, and to processes of preparing these.

Several procedures are known in the art for subjecting chemical species containing 1,2-dihydroxyethylene units to 'oxidative glycol cleavage', a carbon-carbon scission reaction which is accompanied by oxidation of the hydroxymethine groups to aldehydes or carboxylic acids. In polymeric carbohydrates, In which the 1,2-dihydroxyethylene units are usually part of a 5- or 6-membered ring, the carbon-carbon bond scissions do not lead to degradation of the polymeric chains. The best-known procedures for said conversions in carbohydrates are:
- sodium periodate oxidation to dialdehydes (see e.g. WO 95/12619), which, if so desired, can be followed by oxidation to the corresponding diacids by reaction with sodium chlorite and hydrogen peroxide, and
- direct conversion of carbohydrates to diacids by reaction with sodium hypochlorite and a catalytic amount of bromine (see e.g. EP-A-427349).

In principle, such conversions can be carried out with any carbohydrate containing 1,2-dihydroxyethylene units, but most of the work known in the art has been restricted to dialdehyde starch and dialdehyde inulin, and dicarboxylic starch and dicarboxylic inulin, respectively. Dialdehyde derivatives of carbohydrates have been reported to be useful as additives in papermaking processes (wet-end strengthening); dicarboxylic derivatives of carbohydrates are useful due to their capacity to bind divalent metal ions, notably calcium and magnesium ions.

Another reaction of dialdehyde starch was described by Jeanes and,Hudson, *J. Org. Chem.* **20,** 1565-1568 (1955). They heated the periodate-oxidised starch at 100°C for 45 minutes and then treated the cooled solution with barium acetate and 2 equivalents of bromine, ultimately resulting in the generation of erythritol and erythronic lactone from the periodate-oxidised starch. Under those heating conditions, the dialdehyde groups of the oxidised starch will disproportionate to carboxyl and alcohol groups by the well-known Cannizarro reaction. Moreover, the process is accompanied by considerable chain degradation. Thus the reaction product is not a polymeric product having appreciable levels of aldehyde groups In addition to the carboxylic groups.

It was found now that in 'dialdehyde carbohydrates', i.e. carbohydrates in which the 1,2-dihydroxyethylene groups of the parent carbohydrate have been partly or completely converted to dialdehyde groups, one of the aldehyde groups can be selectively oxidised to a carboxyl group. The mono-carboxyl-monoaldehyde carbohydrate derivatives thus obtained have interesting properties and can be applied e.g. as temporary crosslinkers in polysaccharide solutions or suspensions or as reactive hydrophilic coatings. They are also versatile starting materials for further derivatisation, especially to amino derivatives, to obtain e.g. polymeric surfactants, emulsifiers or decoupling polymers. The carboxylaldehyde carbohydrates of the invention have an aldehyde to carboxyl ratio of between 25/75 and 80/20, especially between 40/60 and 75/25 and are selected from α-1,4-glucans, glucomannans, galactomannans, and β-2,1- and β-2,6-fructans. They contain on average 0.1-1.5, preferably 0.5-1.3 carboxyl group, and 0.5-1.9, preferably 0.7-1.5 aldehyde group per oxidised 1,2-dihydroxyethylene group. Per total number of repeating units (including non-oxidised units if any), the products of the invention contain on average 0.1-1.2, preferably 0.2-1.0 carboxyl group and 0.2-1.5, preferably 0.3-1.2 aldehyde group per repeating unit.

The present invention also includes a new process for the oxidation of aldehyde groups to carboxylic groups in carbohydrate derivatives, in which only a catalytic amount of molecular halogen is required. The catalytic amount of halogen is regenerated in situ by oxidation with an oxidising agent. Preferably, this novel process comprises the use of peracids for the (re)generation of the molecular halogen instead of sodium hypochlorite. It was found that the novel process, besides reducing the amount of halide produced, is also beneficiary to the properties of the partially oxidised products, in that a lower extent of degradation is observed. In addition, this process is considerably cheaper than the oxidation with sodium chlorite in the presence of hydrogen peroxide.

The catalytic amount of molecular halogen may be 0.2-40, preferably from 1 to 10 mole%, with respect to the amount of peracid. The halogen may be chlorine, bromine or iodine. The peracid may be any peralkanoic acid such as peracetic acid, perpropionic acid, perlauric acid etc., a substituted peralkanoic acid such as peroxytrifluoroacetic acid, an optionally substituted aromatic peracid such as perbenzoic acid or m-chloroperbenzoic acid, or an inorganic peracid such as perboric or persulphuric acid.

The process according to the invention can be applied to any carbohydrate containing 1 ,2-ditiydroxyethylene groups in its recurring units, which carbohydrate contains a relatively low level of reducing end groups. Such carbohydrates include non-reducing disaccharides and oligosaccharides, such as sucrose, raffinose, trehalose and similar oligosaccharides, and polysaccharides which are 1,2-, 1,4- or 1,6-linked. Examples include α-1,4-glucans (the "starch family"), β-1,4-glucans (cellulose), glucomannans and galactomannans (guar and locust bean gum), (arabino)xylans (hemicellulose) and β-2,1-and β-2,6-fructans (inulin and levan). The starch-type carbohydrates, Cellulose and inulin are preferred carbohydrates. The amino-substituted oxidation products of the invention can be derived from the same carbohydrates.

Modifications of starch and other carbohydrates can also be used as starting materials, and comprise partially hydrolysed products, as well as physical and chemical modifications, including hydroxyalkyl, carboxyalkyl and similar derivatives, as well as uronic analogues. Short-chain carbohydrate derivatives, including monosaccharides, in which the reducing end groups have been protected, e.g. as glycosides, are also suitable starting materials. The carbohydrates are oxidised to dialdehyde derivatives by (meta)periodate oxidation or any other suitable method, such as methods using manganese oxides. The oxidation may be complete, i.e. the oxidised carbohydrate may exclusively consist of dialdehyde monose units, or the oxidation may be partial, i.e. to a degree of oxidation (dialdehyde monose units) of 0.1-0.99 or 0.2-0.8.

After (partial) oxidation of the 1,2-dlihydroxyethylene groups in a carbohydrate to obtain the corresponding dialdehyde derivative, this product is further oxidised by reacting it with a catalytic amount of molecular halogen, preferably bromine, in the presence of an oxidising agent such as hypochlorite or a suitable peracid, preferably peracetic acid. The reaction can be performed in an aqueous slurry or solution, at a pH of 3-7, preferably 4-6. The reaction temperature is typically from 0 up to 80°C, preferably up to 50°C, more preferably from 0°C to ambient temperature. The reaction may be carried out in a closed system to avoid loss of halogen by evaporation. A product is obtained, in which 0.1-1.5, preferably 0.6-1.2, aldehyde function in each oxidised 1,2-dihydroxyethylene group has been converted to carboxylic acid groups. The carboxylic acid groups may be present in the product in the form of the free acids, their carboxylate salts (e.g. with metal or (substituted) ammonium ions), as 4-7 membered lactones, or as mixtures thereof. The remaining aldehyde groups may be present as such, in the form of their hydrates or as (hemi-)acetals or (hemi-) aldals.

Using the process of the invention, a distinct decrease in the reaction rate is observed when the degree of oxidation reaches about 50%, i.e. when about 50% of the available aldehyde groups have been converted to carboxylic groups. It is believed that the oxidation takes place in such a manner that one of the aldehyde functions in each monomeric unit reacts first, whereas the oxidation of the other aldehyde function proceeds more slowly, most likely due to the formation of stable cyclic hemi-acetals. As a result, the reaction can be stopped conveniently at this stage, and a product is obtained in which approximately equal amounts of aldehyde and carboxylic functions are present.

The product has as a characteristic feature that essentially all dialdehyde functions have been converted to mono-aldehyde-monocarboxylic functions. In the case of amylose that has been converted fully to dialdehyde amylose, oxidation according to the process of the present invention will lead to a structurally regular product with alternating aldehyde and carboxylic groups. So far, it has been notoriously difficult to obtain structural regularity in carbohydrates derivatives. The products of the invention provide novel material properties.

The oxidised carbohydrates can also serve as starting materials for a range of derivatives. The aldehyde is especially useful as an anchor for further derivatisation. The reaction of the residual aldehyde groups with amines is of particular interest and leads to products that are structurally quite different from reaction products of amines and dialdehyde functions. In the latter case, when primary amines are used, each amine group will usually react with both aldehyde groups in the dialdehyde moiety, supposedly leading to seven-membered rings incorporating one nitrogen atom (*see* Guthrie, *Advances in Carbohydrate Chemistry,* Vol. 16, 1961). In the case of the oxidised carbohydrates as described herein above, however, the remaining aldehyde function of each mono-aldehyde-mono-carboxylic moiety will react with an amine group, leading to an acyclic moiety. The resulting products have interesting properties, associated with their zwitterionic (both catonic and anionic) nature and surface-active (both polar and apolar parts) and metal-binding properties.

The amines that can be coupled to the mono-aldehyde-mono-acids include primary and secondary amines having the formula HNR¹R², with R¹ and R² as defined in the claims. Examples of amines are ammonia, alk(en)ylamines such as methyl, allyl, butyl, decyl, hexadecyl or octadecenyl, dialkyl amines, cyclic amines such as pyrrolidines, piperidines, morpholines, thiazolines, imidazoles, tetrazoles, triazines etc., carboxy-substituted amines such as glycine, lysine or other α-amino acids, or iminodiacetic acid, hydroxy-substituted amines such as diethanolamine, and diamines and polyamines such as hexamethylenediamine, and further other amino-functional molecules that can react with aldehyde functions such as hydrazine, hydrazides, hydrazones, hydroxylamines, amidines, guanidines, isothiourea's and the like. The latter can be used for crosslinking the carbohydrates.

Coupling of the amines to the aldehyde function results primarily in imines, which are usually not thermally and hydrolytically stable, and are, therefore, preferably reduced to the corresponding amines using conventional reducing agents such as borohydrides. The reductive amination can also be performed in a single step, using reducing agents such as borohydrides or using pressurised hydrogen in the presence of a metal catalyst. These amination reactions as such are well-known to the skilled person.

The amino-substituted carbohydrate oxidation product of the invention may contain on average 0.1-1.5, preferably 0.3-1.3 carboxyl group and 0.1-1.9, preferably 0.3-1.5 substituted amine group per oxidised 1,2-dihydroxyethylene group. Per total number of repeating.units (including non-oxidised units if any), they may contain on average 0.1-1.2, preferably 0.2-1.0 carboxyl group, and 0.1-1.5, preferably 0.3-1.2 substituted amino groups per repeating unit. In addition to the amino groups, the product may or may not contain residual carbonyl (aldehyde) groups; in other words, the amination of the aldehyde groups may be partial or complete.

### Example 1

### Preparation of a starch derivative containing approximately equivalent amounts of aldehyde and carboxylic functions (Monoaldehyde monocarboxylic starch, MACS)

### 1a. Preparation of dialdehyde starch (DAS)

122.5 grams (0.76 mole, based on anhydroglucose) of starch (weight corrected for dry matter content) are suspended in 500 ml of demineralised water. The suspension is brought to pH 4.5 and cooled to 5°C. Sodium periodate (165 g, 0.77 mole) is added and the suspension is stirred at 5°C in the dark for 20 hours. The dialdehyde starch obtained in this fashion is isolated by filtration. The crude product is washed extensively with water until iodate can no longer be detected by reaction with potassium iodide.

### 1b. Preparation of monoaldehyde monocarboxylic starch (MACS)

The DAS thus prepared was oxidised further using bromine/peracetic acid. In order to oxidise approximately 50% of the aldehyde groups present, 0.76 mole of peracetic acid (0.584 M solution, 1,31) was added in 14 portions to the well-stirred suspension of DAS in 1 I of water, to which 12 g (0.12 mole, corresponding to 0.06 mole of Br₂) of sodium bromide had been added. This amount was sufficient to effect complete conversion of peracetic acid to acetic acid through oxidation of bromide to bromine, which is the oxidising species in the reaction. The pH was kept at 5 (addition of 0.1 N sodium hydroxide solution, pH-stat) throughout the reaction and each consecutive portion of peracetic acid was added after the suspension/solution had turned colourless. Upon completion of the reaction, the solution was desalinated by ultrafiltration, using a membrane with a cut-off MW 5000, and freeze-dried.

### Characterisation of MACS

*Carboxylic acid content* Desalinated MACS was dissolved in a small volume of demineralised water and eluted over a cation-exchange resin (H⁺-form). The eluate was freeze-dried and titrated with sodium hydroxide solution. The carboxylic content was found to be about 0.7 carboxylic groups per monomer unit.
*Aldehyde content*: An excess of hydroxylammonium chloride was reacted with desalinated MACS. The hydrochloric acid that was liberated upon reaction with the aldehyde functions was titrated with sodium hydroxide solution. The aldehyde content was found to be about 1.2 aldehyde functions per monomer unit.
The ratio of aldehyde to carboxylic acid is therefore approximately 60-40.

### Example 2

### Reductive amination of MACS with L-aspartic acid

5.0 g of lyophilised MACS, prepared according to Example 1, are suspended in 150 ml of water whilst stirring. The suspension is stirred for another 30 minutes after which 7.5 g of aspartic acid are added. The pH is adjusted to 6.0 with 0.1 M hydrochloric acid solution and stirred for 48 hours, maintaining the pH at 6.0 using a pH-stat apparatus. During the reaction 385 mg of sodium cyanoborohydride is added in portions of 30-40 mg, at regular intervals. After 48 hours, an additional 200 mg of sodium cyanoborohydride is added in one portion. Once the evolution of hydrogen has ceased, the pH is raised to 7.0 and any unreacted aspartic acid and inorganic salts are removed from the reaction mixture by means of nanofiltration and the residue is lyophilised.

The product was tested for its copper(II) binding capacity, using a copper(II)-selective electrode. 100 mg of product were dissolved in 100 ml of water and titrated with a 0.4 M CuCl₂ solution until a residual Cu²⁺ concentration of 1 x 10⁻⁵ M had been reached. The copper-binding capacity was found to be 0.9 mmol/g.

### Example 3

### Reductive amination of MACS with iminodiacetic acid

1.0 g of lyophilised MACS, prepared according to Example 1, is suspended in 50 ml of water whilst stirring. The suspension is stirred for another 30 minutes after which 1.5 g (3 mmol) of iminodiacetic acid are added. The pH is adjusted to 6,0 with 0.1 M hydrochloric acid solution and stirred for 72 hours, maintaining the pH at 6.0 using a pH-stat apparatus. During the reaction 378 mg of sodium cyanoborohydride is added in portions of 30-40 mg, at regular intervals. After 72 hours, an additional 200 mg of sodium cyanoborohydride is added in one portion. Once the evolution of hydrogen has ceased, the pH is raised to 7.0 and any unreacted iminodiacetic acid and inorganic salts are removed from the reaction mixture by means of nanofiltration and the residue is lyophilised. It was determined by nitrogen analysis that only partial reductive amination (35-40 % of the available aldehyde groups) had taken place.

The product was tested for its copper(II) binding capacity, using a copper(II)-selective, electrode. 100 mg of product were dissolved in 100 ml of water and titrated with a 0.4 M CuCl₂ solution until a residual Cu ²⁺ concentration of 1 x 10⁻⁵ M had been reached. The copper-binding capacity was found to be 0,7 mmol/g.

### Example 4

### Reductive amination af MACS with 1-octyl amine

3.0 g of lyophilised MACS, prepared according to Example 1, are suspended in a well-stirred mixture of 200 ml of water and 50 ml of ethanol. The suspension is stirred for another 30 minutes after which 1.0 g of sodium cyanoborohydride is added. The pH is adjusted to 6.0 with 0.1 M hydrochloric acid solution and 548 mg (25 mol-% with respect to the aldehyde groups MACS) of 1-octyl amine are added dropwise whilst maintaining the pH at 6.0 using a pH-stat apparatus. Stirring and pH-control are continued overnight. The pH is raised to 7.0 and any unreacted 1-octyl amine and inorganic salts are removed from the reaction mixture by means of nanofiltration and the residue is lyophilised.
The surface tension reduction of the product was measured as a function of its concentration, using a drop tensiometer. The results are shown in Table 1.

### Example 5

### Reductive amination of MACS with 1-dodecyl amine

3.0 g of lyophilised MACS, prepared according to Example 1, are suspended in a well-stirred mixture of 200 ml of water and 50 ml of ethanol. The suspension is stirred for another 30 minutes after which 1.0 g of sodium cyanoborohydride is added. The pH is adjusted to 6.0 with 0.1 M hydrochloric acid solution and 785 mg (25 mol-% with respect to the aldehyde groups present in MACS) of 1-dodecyl amine are added dropwise whilst maintaining the pH at 6.0 using a pH-stat apparatus. Stirring and pH-control are continued overnight. The pH is raised to 7.0 and any unreacted amine and inorganic salts are removed from the reaction mixture by means of nanofiltration and the residue is lyophilised.

The surface tension reduction of the product was measured as a function of its concentration in water, using a drop tensiometer. The results are shown in Table 1.

**Table 1.**

| *Surface tensions of aqueous solutions of the products prepared according to Examples 4 and 5, as determined with a drop tensiometer.* | | |
|---|---|---|
| Concentration | Surface tension (mN/m) at 25 °C | |
| (g/l) | | |
| | Example 4 (N-octyl) | Example 5 (N-dodecyl) |
| 0.1 | 70.7 | 68.9 |
| 0.5 | 61.2 | 57.7 |
| 1.0 | 52.3 | 52.2 |
| 2.0 | 48.0 | 47.4 |
| 5.0 | 43.8 | 38.6 |
| 10 | 41.9 | 29.4 |
| 25 | 40.4 | 30.7 |

A significant lowering of the surface tension was observed, the largest effect being observed for the dodecyl amino derivative, which is in agreement with theoretical predictions.

## Claims

1. An oxidised carbohydrate derived from a carbohydrate selected from α-1,4-glucans, glucomannans, galactomannans, and β-2,1- and β-2,6-fructans, containing 1,2-dihydroxyethylene groups in its repeating units, the 1,2-dihydroxyethylene groups having at least partially been oxidised to dialdehyde groups, and a part of the aldehyde groups having been oxidised to carboxylic acid groups, the ratio between aldehyde groups and carboxyl groups being between 25/75 and 80/20.

2. An oxidised carbohydrate according to claim 1, containing on average 0.1-1.5 carboxyl groups and 0.5-1.9 aldehyde groups per oxidised 1,2-dihydroxyethylene group.

3. An oxidised carbohydrate according to claim 2, containing on average 0.5-1.3 carboxyl groups and 0.7-1.5 aldehyde groups per oxidised 1,2-dihydroxyethylene group.

4. An oxidised carbohydrate according to any one of claims 1-3, containing on average 0.1-1.2 carboxyl groups and 0.3-1.2 aldehyde groups per repeating unit.

5. An oxidised carbohydrate according to claim 1 or 2, wherein the carbohydrate is starch, amylose or amylopectin or a modification thereof.

6. An oxidised carbohydrate according to claim 1 or 2, wherein the carbohydrate is a β-2,1-fructan.

7. A process for producing an oxidised carbohydrate containing both aldehyde and carboxyl groups, comprising oxidising a dialdehyde carbohydrate obtainable by oxidising a carbohydrate containing 1,2-dihydroxyethylene groups in its repeating units, the oxidation of the dialdehyde carbohydrate being performed by reacting it with a catalytic amount of molecular halogen, in particular molecular bromine, in the presence of an oxidising agent such as hypochlorite or a peracid.

8. A process according to claim 7, wherein the oxidation with molecular halogen is performed at a pH between 3 and 7.

9. A process according to claim 7 or 8, wherein the molecular halogen is produced in situ by reaction of halide with a carboxylic peracid.

10. A process for producing an oxidised, amino-substituted carbohydrate, comprising reductively aminating residual aldehyde groups in the oxidised carbohydrate obtained by the process according to any one of claims 7-9.

11. An amino-substituted oxidation product derived from a carbohydrate containing 1,2-dihydroxyethylene groups in its repeating units, these dihydroxyethylene groups having at least partially been oxidised to dialdehyde groups, the product containing on average 0.1-1.5 carboxyl groups and 0.1-1.9 substituted amine groups per oxidised 1,2-dihydroxyethylene group.

12. An amino-substituted oxidation product according to claim 11, containing on average 0.1-1.2 carboxyl groups and 0.3-1.2 substituted amino groups per repeating unit.

13. An amino-substituted oxidation product according to claim 11 or 12, wherein said substituted amino group has the formula -NR¹R², wherein R¹ represents hydrogen, a C₁-C₂₀ alkyl, alkenyl or alkynyl group optionally substituted with carboxy, hydroxy, C₁-C₁₂ alkoxy, amino, carbamoyl and/or aryl, including natural and synthetic amino acid residues, and R² represents hydrogen, amino, substituted amino, hydroxy, alkoxy, or a C₁-C₁₂ alkyl, alkenyl or alkynyl group optionally substituted with carboxy, hydroxy, C₁-C₁₂ alkoxy, amino and/or carbamoyl, or a substituted iminomethyl group, or R¹ and R², together with the nitrogen atom to which they are bound, represent a three- to seven-membered heterocyclic system, optionally containing one or more further heteroatoms selected from nitrogen, oxygen and sulphur and optionally substituted with carboxy, hydroxy, oxo, C₁-C₁₂ alkyl, alkenyl, alkynyl or alkoxy, amino, carbamoyl and/or aryl.

## Patentansprüche

1. Oxidiertes Kohlenhydrat, das sich von einem aus α-1,4-Glucanen, Glucomannanen, Galaktomannanen und β-2,1- und β-2,6-Fruktanen ausgewählten Kohlenhydrat ableitet, das 1,2-Dihydroxyethylengruppen in seinen sich wiederholenden Einheiten enthält, wobei die 1,2-Dihydroxyethylengruppen mindestens teilweise zu Dialdehydgruppen oxidiert worden sind und ein Teil der Aldehydgruppen zu Carbonsäuregruppen oxidiert worden sind, wobei das Verhältnis zwischen Aldehydgruppen und Carboxylgruppen 25/75 bis 80/20 beträgt.

2. Oxidiertes Kohlenhydrat nach Anspruch 1, das durchschnittlich 0,1 bis 1,5 Carboxylgruppen und 0,5 bis 1,9 Aldehydgruppen pro oxidierter 1,2-Dihydroxyethylengruppe enthält.

3. Oxidiertes Kohlenhydrat nach Anspruch 2, das durchschnittlich 0,5 bis 1,3 Carboxylgruppen und 0,7 bis 1,5 Aldehydgruppen pro oxidierter 1,2-Dihydroxyethylengruppe enthält.

4. Oxidiertes Kohlenhydrat nach einem der Ansprüche 1 bis 3, das durchschnittlich 0,1 bis 1,2 Carboxylgruppen und 0,3 bis 1,2 Aldehydgruppen pro sich wiederholender Einheiten enthält.

5. Oxidiertes Kohlenhydrat nach Anspruch 1 oder 2, bei der das Kohlenhydrat Stärke, Amylose oder Amylopektin oder eine Modifikation desselben ist.

6. Oxidiertes Kohlenhydrat nach Anspruch 1 oder 2, bei der das Kohlenhydrat ein β-2,1-Fruktan is.

7. Verfahren zur Herstellung eines oxidierten Kohlenhydrats, das sowohl Aldehydals auch Carboxylgruppen enthält, bei dem ein Dialdehydkohlenhydrat, das durch Oxidation eines Kohlenhydrats erhältlich ist, das 1,2-Dihydroxyethylengruppen in seinen sich wiederholenden Einheiten enthält, oxidiert wird, wobei die Oxidation des Dialdehydkohlenhydrats durch seine Umsetzung mit einer katalytischen Menge an molekularem Halogen, insbesondere molekularem Brom, in Gegenwart eines Oxidationsmittels wie beispielsweise Hypochlorit oder einer Persäure durchgeführt wird.

8. Verfahren nach Anspruch 7, bei dem die Oxidation mit molekularem Halogen bei einem pH-Wert von 3 bis 7 durchgeführt wird.

9. Verfahren nach Anspruch 7 oder 8, bei dem das molekulare Halogen in situ durch Umsetzung eines Halogenids mit einer carboxylischen Persäure erzeugt wird.

10. Verfahren zur Herstellung eines oxidierten aminosubstituierten Kohlenhydrats, bei dem restliche Aldehydgruppen in dem oxidierten Kohlenhydrat, das nach dem Verfahren gemäß einem der Ansprüche 7 bis 9 erhalten worden ist, reduktiv aminiert werden.

11. Aminosubstituiertes Oxidationsprodukt, das sich von einem Kohlenhydrat ableitet das 1,2-Dihydroxyethylengruppen in seinen sich wiederholenden Einheiten enthält, wobei diese Dihydroxyethylengruppen mindestens teilweise zu Dialdehydgruppen oxidiert worden sind, wobei das Produkt durchschnittlich 0,1 bis 1,5 Carboxylgruppen und 0,1 bis 1,9 substituierte Aminogruppen pro oxidierter 1,2-Dihydroxyethylengruppe enthält.

12. Aminosubstituiertes Oxidationsprodukt nach Anspruch 11, das durchschnittlich 0,1 bis 1,2 Carboxylgruppen und 0,3 bis 1,2 substituierte Aminogruppen pro sich wiederholender Einheit enthält.

13. Aminosubstituiertes Oxidationsprodukt nach Anspruch 11 oder 12, bei dem die substituierte Aminogruppe die Formel -NR¹R² aufweist, in der R¹ für Wasserstoff, eine C₁- bis C₂₀-Alkyl-, Alkenyl- oder Alkinylgruppe steht, die gegebenenfalls mit Carboxy, Hydroxy, C₁- bis C₁₂-Alkoxy, Amino, Carbamoyl und/oder Aryl substituiert sind, einschließlich natürliche und synthetische Aminosäurereste, und R² für Wasserstoff, Amino, substituiertes Amino, Hydroxy, Alkoxy oder eine C₁- bis C₁₂-Alkyl-, Alkenyl- oder Alkinylgruppe, die gegebenenfalls mit Carboxy, Hydroxy, C₁- bis C₁₂-Alkoxy, Amino und/oder Carbamoyl substituiert sind, oder eine substituierte Iminomethylgruppe steht, oder R¹ und R² zusammen mit dem Stickstoffatom, an das sie gebunden sind, ein 3- bis 7-gliedriges heterocyclisches System darstellen, das gegebenenfalls ein oder mehrere weitere Heteroatome ausgewählt aus Stickstoff, Sauerstoff und Schwefel enthält und gegebenenfalls mit Carboxy, Hydroxy, Oxo, C₁- bis C₁₂-Alkyl, Alkenyl, Alkinyl oder Alkoxy, Amino, Carbamoyl und/oder Aryl substituiert ist.

## Revendications

1. Hydrate de carbone oxydé dérivé d'un hydrate de carbone choisi parmi les α-1,4-glucanes, les glucomannanes, les galactomannanes et les β-2,1- et β-2,6-fructanes, contenant des groupes 1,2-dihydroxyéthylène dans ses unités récurrentes, les groupes 1,2-dihydroxyéthylène ayant été au moins en partie oxydés en groupes dialdéhyde et une partie des groupes aldéhyde ayant été oxydée en groupes acide carboxylique, le rapport entre les groupes aldéhyde et les groupes carboxyle se situant entre 25/75 et 80/20.

2. Hydrate de carbone oxydé selon la revendication 1, contenant en moyenne 0,1 à 1,5 groupe carboxyle et 0,5 à 1,9 groupe aldéhyde par groupe 1,2-dihydroxyéthylène oxydé.

3. Hydrate de carbone oxydé selon la revendication 2, contenant en moyenne 0,5 à 1,3 groupe carboxyle et 0,7 à 1,5 groupe aldéhyde par groupe 1,2-dihydroxyéthylène oxydé.

4. Hydrate de carbone oxydé selon l'une quelconque des revendications 1 à 3, contenant en moyenne 0,1 à 1,2 groupe carboxyle et 0,3 à 1,2 groupe aldéhyde par unité récurrente.

5. Hydrate de carbone oxydé selon la revendication 1 ou 2, dans lequel l'hydrate de carbone est l'amidon, l'amylose, l'amylopectine ou une de leurs variantes.

6. Hydrate de carbone oxydé selon la revendication 1 ou 2, dans lequel l'hydrate de carbone est un β-2,1-fructane.

7. Procédé de production d'un hydrate de carbone oxydé contenant à la fois des groupes aldéhyde et carboxyle, comprenant l'oxydation d'un hydrate de carbone dialdéhyde obtenu par oxydation d'un hydrate de carbone contenant des groupes 1,2-dihydroxyéthylène dans ses unités récurrentes, l'oxydation de l'hydrate de carbone dialdéhyde étant réalisée en le faisant réagir avec une quantité catalytique d'halogène moléculaire, en particulier du brome moléculaire, en présence d'un agent oxydant tel qu'un hypochlorite ou un peracide.

8. Procédé selon la revendication 7, dans lequel l'oxydation avec un halogène moléculaire est réalisée à un pH compris entre 3 et 7.

9. Procédé selon la revendication 7 ou 8, dans lequel l'halogène moléculaire est produit in situ par réaction de l'halogénure avec un peracide carboxylique.

10. Procédé de production d'un hydrate de carbone oxydé à substitution amino, comprenant l'amination réductrice de groupes aldéhyde résiduels dans l'hydrate de carbone oxydé obtenu par le procédé selon l'une quelconque des revendications 7 à 9.

11. Produit d'oxydation à substitution amino dérivé d'un hydrate de carbone contenant des groupes 1,2-dihydroxyéthylène dans ses unités récurrentes, ces groupes dihydroxyéthylène ayant été au moins en partie oxydés en groupes dialdéhyde, le produit contenant en moyenne 0,1 à 1,5 groupes carboxyle et 0,1 à 1,9 groupe amino substitué par groupe 1,2-dihydroxyéthylène oxydé.

12. Produit d'oxydation à substitution amino selon la revendication 11, contenant en moyenne 0,1 à 1,2 groupes carboxyle et 0,3 à 1,2 groupe amino substitué par unité récurrente.

13. Produit d'oxydation à substitution amino selon la revendication 11 ou 12, dans lequel ledit groupe amino substitué a la formule -NR¹R², dans laquelle R¹ représente l'hydrogène, un groupe alkyle, alcényle ou alcynyle en C₁-C₂₀ facultativement substitué par des groupes carboxy, hydroxy, alcoxy en C₁-C₁₂, amino, carbamoyle et/ou aryle, notamment des résidus d'acides aminés naturels et synthétiques, et R² représente l'hydrogène et les groupes amino, amino substitué, hydroxy, alcoxy, ou un groupe alkyle, alcényle, alcynyle en C₁-C₁₂, facultativement substitué par un groupe carboxy, hydroxy, alcoxy en C₁-C₁₂, amino et/ou carbamoyle, ou un groupe iminométhyle substitué, ou R¹ et R², conjointement avec l'atome d'azote auquel ils sont liés, représentent un système hétérocyclique à trois à sept éléments, contenant facultativement un ou plusieurs autres hétéroatomes choisis parmi l'azote, l'oxygène et le soufre et facultativement substitués par des groupes carboxy, hydroxy, oxo, alkyle, alcényle, alcynyle ou alcoxy en C₁-C₁₂, amino, carbamoyle et/ou aryle.
